# EUROPÄISCHE PATENTANMELDUNG

(11) **EP 4 202 268 A1**
(43) Veröffentlichungstag der Anmeldung: **28.06.2023**
(21) Anmeldenummer: 21217237.3
(22) Anmeldetag: 23.12.2021
(51) Int. Cl.: F16K 11/044, F16K 27/02, F16K 31/06, F16K 31/10

(54) **VENTILGEHÄUSE UND VERFAHREN ZUR HERSTELLUNG EINES VENTILGEHÄUSES**

(71) Anmelder: AVS, Ingenieur J.C. Römer GmbH, 94481 Grafenau (DE)
(72) Erfinder: Fisch, Rainer, 94051 Hauzenberg (DE)
(74) Vertreter: Wolf, Gerhard

(57) **Zusammenfassung**

Die Erfindung betrifft ein Ventilgehäuse für ein Fluidventil (1) umfassend zumindest einen von einem Fluid durchfließbaren Fluidkanal (11), wobei das Ventilgehäuse (10) einen Aufnahmeraum (12) für einen im Ventilgehäuse (10) bewegbaren Ventilschließkörper (2) aufweist, wobei der Aufnahmeraum (12) eine Öffnung (12.1) aufweist, über die der Ventilschließkörper (2) in den Aufnahmeraum (12) des Ventilgehäuses (10) eingebracht ist und wobei in dem Aufnahmeraum (12) zumindest ein erster Ventilsitz (13) ausgebildet ist und in den Aufnahmeraum (12) hineinragt, und zwar derart, dass sich durch den ersten Ventilsitz (13) zumindest eine Hinterschneidung (13.1) in dem Aufnahmeraum (12) ausbildet und wobei das Ventilgehäuse (10) ein einstückig ausgebildetes Spritzgussteil ist, wobei der zumindest eine Ventilsitz (13) einstückig mit dem Ventilgehäuse (10) durch einen Spritzgießprozess hergestellt ist.

## Beschreibung

Die Erfindung betrifft ein Ventilgehäuse, ein Fluidventil mit einem Ventilgehäuse sowie ein Verfahren zur Herstellung eines Ventilgehäuses.

Fluidventile zur Steuerung eines Fluidflusses sind grundsätzlich bekannt. Das Fluid ist dabei insbesondere eine Flüssigkeit. Derartige Fluidventile werden insbesondere im Lebensmittelbereich eingesetzt, beispielsweise in Wasserspendern, Kaffeemaschinen etc.

Derartige Fluidventile weisen ein Ventilgehäuse auf, in dem zumindest ein Fluidkanal ausgebildet ist. In dem Ventilgehäuse ist ein Ventilschließkörper vorgesehen, der durch eine Antriebseinheit bewegt, insbesondere um eine Schwenkachse verschwenkt wird. Durch die Verschwenkung kann eine Dichtmembran an einen Ventilsitz gedrückt werden, um den Fluidfluss durch das Fluidventil zu steuern.

Ein wesentlicher Nachteil bekannter Fluidventile besteht darin, dass der Ventilsitz durch ein vom Ventilgehäuse unabhängiges Bauteil gebildet wird, das in das Ventilgehäuse eingesetzt bzw. eingeschraubt ist. Da die Einbaulage des Ventilsitzes durch das Einsetzen bzw. Einschrauben variieren kann, ist es nötig, die Lage des Ventilsitzes nach der Herstellung derart zu justieren, dass ein gewünschtes Schließverhalten des Fluidventils erreicht wird. Dies ist zum einen zeitaufwändig und damit teuer, zum anderen ist die Funktionsgüte des Fluidventils entscheidend von der Justiergenauigkeit abhängig, die von dem jeweiligen Werker erbracht wird, so dass die Funktionsgüte des Fluidventils unerwünschten Schwankungen unterworfen sein kann.

Ausgehend hiervon ist es Aufgabe der Erfindung, ein Ventilgehäuse anzugeben, das kostengünstig herstellbar ist und ein hochgenaues Schließverhalten mit geringen fertigungstechnischen Schwankungen aufweist.

Die Aufgabe wird durch ein Ventilgehäuse mit den Merkmalen des unabhängigen Patentanspruchs 1 gelöst. Bevorzugte Ausführungsformen sind Gegenstand der Unteransprüche. Ein Fluidventil mit einem Ventilgehäuse ist Gegenstand des nebengeordneten Patentanspruchs 12 und ein Verfahren zur Herstellung eines Fluidventils ist Gegenstand des weiteren nebengeordneten Patentanspruchs 13.

Gemäß einem Aspekt wird ein Ventilgehäuse für ein Fluidventil offenbart. Das Ventilgehäuse umfasst zumindest einen von einem Fluid durchfließbaren Fluidkanal und einen Aufnahmeraum für einen im Ventilgehäuse bewegbaren, insbesondere verschwenkbaren Ventilschließkörper. Der Aufnahmeraum weist eine Öffnung auf, über die der Ventilschließkörper in den Aufnahmeraum des Ventilgehäuses eingebracht ist. In dem Aufnahmeraum ist zumindest ein erster Ventilsitz ausgebildet, der in den Aufnahmeraum hineinragt. Durch dieses Hineinragen des ersten Ventilsitzes wird zumindest eine Hinterschneidung in dem Aufnahmeraum gebildet. Das Ventilgehäuse ist ein einstückig ausgebildetes Spritzgussteil, wobei der zumindest eine Ventilsitz einstückig mit dem Ventilgehäuse durch einen Spritzgießprozess hergestellt ist. In anderen Worten ist der Ventilsitz nicht als separates Bauteil in das Ventilgehäuse eingesetzt oder eingeschaubt, sondern direkter Bestandteil des Ventilgehäuses und damit einstückig mit dem Ventilgehäuse hergestellt und unlösbar mit diesem verbunden.

Der technische Vorteil des Ventilgehäuses besteht darin, dass durch die Herstellung des zumindest einen Ventilsitzes durch den Spritzgussprozess keine bzw. reduzierte Aufbautoleranzen entstehen, so dass keine Justierung des Fluidventils mehr nötig ist. Dadurch kann die Streuung des Schließverhaltens des Fluidventils reduziert werden. Zudem wird der Montageaufwand reduziert, so dass eine einfachere und kostengünstigere Herstellung des Fluidventils möglich ist.

Gemäß einem Ausführungsbeispiel liegt dem ersten Ventilsitz entweder ein zweiter Ventilsitz oder ein Anschlag für den Ventilschließkörper im Aufnahmeraum diametral gegenüber. Damit kann der Ventilschließkörper durch das Paar von einander gegenüberliegenden Ventilsitzen bzw. dem Ventilsitz und dem gegenüberliegenden Anschlag in seiner Schwenkbewegung begrenzt werden. Insbesondere wird durch diese Begrenzung der Schwenkbewegung auch eine Begrenzung des verschwenkbaren oder verschiebbaren Ankers einer magnetischen Antriebseinheit erreicht, so dass auch dieser Anker bezüglich dessen Verschwenkwinkels oder Verschiebeweges nicht mehr justiert werden muss.

Gemäß einem Ausführungsbeispiel ragt der zweite Ventilsitz oder der Anschlag für den Ventilschließkörper in den Aufnahmeraum hinein, und zwar derart, dass sich durch den zweiten Ventilsitz oder den Anschlag zumindest eine Hinterschneidung in dem Aufnahmeraum ausbildet. Das Hineinragen des Ventilsitzes hat den Vorteil, dass der Ventilschließkörper bzw. die darauf befindliche Dichtmembran gegen den Ventilsitz zur Anlage gelangt, so dass das Schließverhalten des Fluidventils verbessert wird. Zudem kann durch die Hinterschneidung ein hinreichend großer Fluidkanalquerschnitt zwischen den jeweiligen Anschlüssen des Fluidventils sichergestellt werden.

Gemäß einem Ausführungsbeispiel ist die Hinterschneidung an einem der Öffnung des Aufnahmeraums abgewandten unteren Bereich des Aufnahmeraums vorgesehen. Dadurch wird das Umfließen des Ventilschließkörpers um dessen freies Ende herum entscheidend verbessert, da der Fluidkanalquerschnitt durch die Hinterschneidungen vergrößert ist.

Gemäß einem Ausführungsbeispiel weist der erste und/oder zweite Ventilsitz eine ringförmige Erhebung auf, die eine planare Anlagefläche für eine den Ventilschließkörper abschnittsweise umgebende Dichtmembran ausbildet. An der Erhebung ist eine ringförmige Dichtkante vorgesehen, die axial in den Aufnahmeraum vorsteht. In anderen Worten überragt die Dichtkante die planare Anlagefläche in Richtung des Ventilschließkörpers bzw. der darauf befindlichen Dichtmembran. Die ringförmige Erhebung bildet ein Flächenlager für die Dichtmembran und damit einen Anschlag, der die Verschwenkbarkeit des Ventilschließkörpers beschränkt. Die von der ringförmigen Erhebung abstehende Dichtkante drückt sich bei der Anlage der Dichtmembran an der ringförmigen Erhebung in die Dichtmembran ein und bewirkt damit eine hohe Dichtigkeit des Fluidventils.

Gemäß einem Ausführungsbeispiel ist die Dichtkante am radial inneren Rand der ringförmigen Erhebung vorgesehen. Dadurch befindet sich die Dichtkante direkt an der Ventilöffnung. Dies ist vorteilhaft, da damit die Fläche, in der das Fluid Druck auf den Ventilschließkörper ausübt, minimiert und dadurch der Fluidruck, bei dem das Fluidventil durch die Antriebseinheit schaltbar ist, maximiert wird.

Gemäß einem Ausführungsbeispiel bildet der Rand der Öffnung des Aufnahmeraums eine Radialdichtfläche ausbildet, die zur Anlage eines Fußbereichs einer Dichtmembran vorgesehen ist, die zur Abdichtung der Öffnung nach außen hin dient. Die Dichtmembran ist dabei vorzugsweise eine einstückige Dichtmembran, die ebenfalls den Ventilschließkörper freiendseitig umschließt. Vorzugsweise bildet der Rand der Öffnung des Aufnahmeraums eine äußere Radialdichtfläche, gegenüber der der Fußbereich der Dichtmembran außenumfangsseitig anliegt. Innenumfangsseitig kann ein Fortsatz der Antriebseinheit des Fluidventils die Anpressung der Dichtmembran an die äußere Radialdichtfläche bewirken. Der Fortsatz der Antriebseinheit kann insbesondere ein Fortsatz an einem Ventilgehäuseträger sein, der zur Kopplung des Ventilgehäuses mit der Antriebseinheit dient. Dadurch wird eine sichere Abdichtung zwischen dem Ventilgehäuse und der Antriebseinheit erreicht.

Gemäß einem Ausführungsbeispiel weist die Öffnung eine rotationsunsymmetrische Umfangsform aufweist. Durch die Rotationsunsymmetrie wird erreicht, dass zum einen die Antriebseinheit in einer vorgegebenen Orientierung auf das Ventilgehäuse aufgebracht werden muss, zum anderen kann auch die Dichtmembran lediglich in einer definierten Drehlage in das Ventilgehäuse eingesetzt werden, so dass deren Ausrichtung relativ zu dem zumindest einen Ventilsitz definiert ist. Dadurch können Montageungenauigkeiten reduziert werden, die zu einer verringerten Verschlussgüte des Fluidventils führen.

Gemäß einem Ausführungsbeispiel weist das Ventilgehäuse Kopplungsabschnitte auf, mittels denen das Ventilgehäuse lösbar an einer Antriebseinheit befestigbar ist, mittels der der Ventilschließkörper bewegbar ist. Dadurch wird eine leichte Montage des Fluidventils erreicht. Vorzugsweise sind die Kopplungsabschnitte derart ausgebildet, dass das Ventilgehäuse lediglich in einer vorgegebenen Position bzw. Ausrichtung an der Antriebseinheit angeordnet werden kann.

Gemäß einem Ausführungsbeispiel sind die Kopplungsabschnitte zur rastenden Befestigung an der Antriebseinheit ausgebildet. Dadurch lässt sich das Ventilgehäuse leicht und werkzeuglos an der Antriebseinheit montieren.

Gemäß einem Ausführungsbeispiel weist das Ventilgehäuse zumindest eine Aufnahme für eine Schlauchschnellkupplung auf. In diese Aufnahme lässt sich beispielsweise eine Schlauchschnellkupplung einschrauben oder einpressen. Die Schlauchschnellkupplung kann insbesondere dazu ausgebildet sein, ein freies Ende eines Fluidschlauchs in sich aufzunehmen und diesen durch eine Fixiervorrichtung, beispielsweise in die Schlauchwandung eingreifende Widerhaken, gegen unerwünschtes Herauslösen zu sichern. Dadurch kann eine schnelle Kopplung eines Schlauchs mit dem Fluidventil erreicht werden.

Gemäß einem weiteren Aspekt wird ein Fluidventil offenbart. Das Fluidventil umfasst ein Ventilgehäuse und eine magnetische Antriebseinheit für einen im Ventilgehäuse bewegbaren Ventilschließkörper. Das Ventilgehäuse ist gemäß einem der vorhergehenden Ausführungsbeispielen ausgebildet.

Gemäß einem nochmals weiteren Aspekt wird Verfahren zur Herstellung eines Ventilgehäuses für ein Fluidventil offenbart. Das Fluidventil weist zumindest einen von einem Fluid durchfließbaren Fluidkanal und einen Aufnahmeraum für einen im Ventilgehäuse bewegbaren Ventilschließkörper auf. Das Herstellverfahren umfasst dabei die folgenden Schritte:
- Bereitstellen einer Spritzgussform;
- Bereitstellen zumindest eines ersten und zweiten Kerns, die zur Ausbildung von Abschnitten zumindest eines Fluidkanals in dem Ventilgehäuse vorgesehen sind;
- Bereitstellen eines zusammenfallenden Kerns zur Ausbildung des Aufnahmeraums, wobei der zusammenfallende Kern zumindest eine Ausnehmung zur Herstellung zumindest eines Ventilsitzes in dem Aufnahmeraum aufweist;
- Einbringen des ersten und zweiten Kerns und des zusammenfallenden Kerns in die Spritzgussform, wobei zumindest der erste Kern derart mit dem zusammenfallenden Kern zusammenwirkt, dass das freie Ende des ersten Kerns auf die Ausnehmung des zusammenfallenden Kerns hin ausgerichtet ist;
- Einbringen eines fließfähigen Gussmaterials in die Spritzgussform; und
- Herauslösen des ersten und zweiten Kerns sowie des zusammenfallenden Kerns aus der Spritzgussform;

Das durch den Spritzgießvorgang erzeugte Ventilgehäuse weist zumindest einen Ventilsitz auf, der in den Aufnahmeraum hineinragt, und zwar derart, dass sich durch den Ventilsitz zumindest eine Hinterschneidung in dem Aufnahmeraum ausbildet.

Das Herstellverfahren bietet den technischen Vorteil, dass das als Spritzgussteil ausgebildete Ventilgehäuse eine sehr präzise Funktion des Fluidventils ermöglicht, da das Ventilgehäuse einschließlich des zumindest einen Ventilsitzes sehr genau und exakt herstellbar ist und damit eine hohe Wiederholgenauigkeit des Fluidventils ohne anschließendes nachgelagertes Justieren bzw. Einstellen erreicht wird. Durch die Verwendung eines zusammenfallenden Kerns lässt sich der zumindest eine Ventilsitz trotz Hinterschneidung einstückig mit dem Ventilgehäuse fertigen.

Gemäß einem Ausführungsbeispiel des Verfahrens wird durch den zusammenfallenden Kern zumindest ein Ventilsitz mit einer ringförmigen Erhebung gebildet, die eine planare Anlagefläche für eine den Ventilschließkörper abschnittsweise umgebende Dichtmembran ausbildet. Durch den zusammenfallenden Kern wird an der Erhebung eine ringförmige Dichtkante gebildet, die axial in den Aufnahmeraum vorsteht. Die ringförmige Erhebung bildet ein Flächenlager für die Dichtmembran und damit einen Anschlag, der die Verschwenkbarkeit des Ventilschließkörpers beschränkt. Die von der ringförmigen Erhebung abstehende Dichtkante kann sich bei der Anlage der Dichtmembran an der ringförmigen Erhebung in die Dichtmembran eindrücken, wodurch eine hohe Dichtigkeit des Fluidventils bewirkt wird.

Gemäß einem Ausführungsbeispiel wird durch den zusammenfallenden Kern eine außenseitig am Ventilgehäuse vorgesehene Öffnung des Aufnahmeraums gebildet, die eine rotationsunsymmetrische Umfangsform aufweist. Durch die Rotationsunsymmetrie wird erreicht, dass zum einen die Antriebseinheit in einer vorgegebenen Orientierung auf das Ventilgehäuse aufgebracht werden muss, zum anderen kann auch die Dichtmembran lediglich in einer definierten Drehlage in das Ventilgehäuse eingesetzt werden, so dass deren Ausrichtung relativ zu dem zumindest einen Ventilsitz definiert ist. Dadurch können Montageungenauigkeiten reduziert werden, die zu einer verringerten Verschlussgüte des Fluidventils führen würden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft eine Längsschnittdarstellung eines Fluidventils;
- Fig. 2: beispielhaft ein Ventilgehäuse in einer perspektivischen Darstellung;
- Fig. 3: beispielhaft eine Längsschnittdarstellung mittig durch das in Fig. 2 gezeigte Ventilgehäuse;
- Fig. 4: beispielhaft eine Detaildarstellung des in Fig. 3 mit Z gekennzeichneten Bereichs zur Veranschaulichung des Ventilsitzes; und

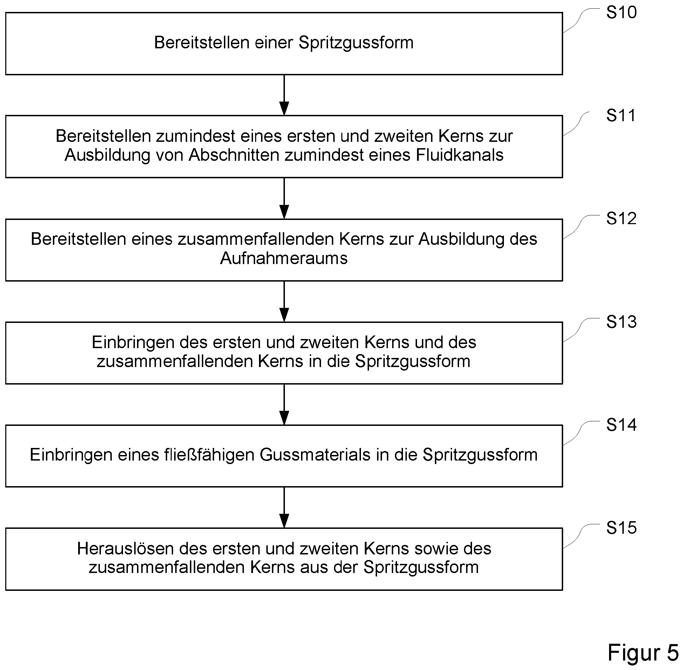

- Fig. 5: ein Ablaufdiagramm, das die Schritte zur Herstellung eines Ventilgehäuses mittels eines Spritzgießverfahrens verdeutlicht.

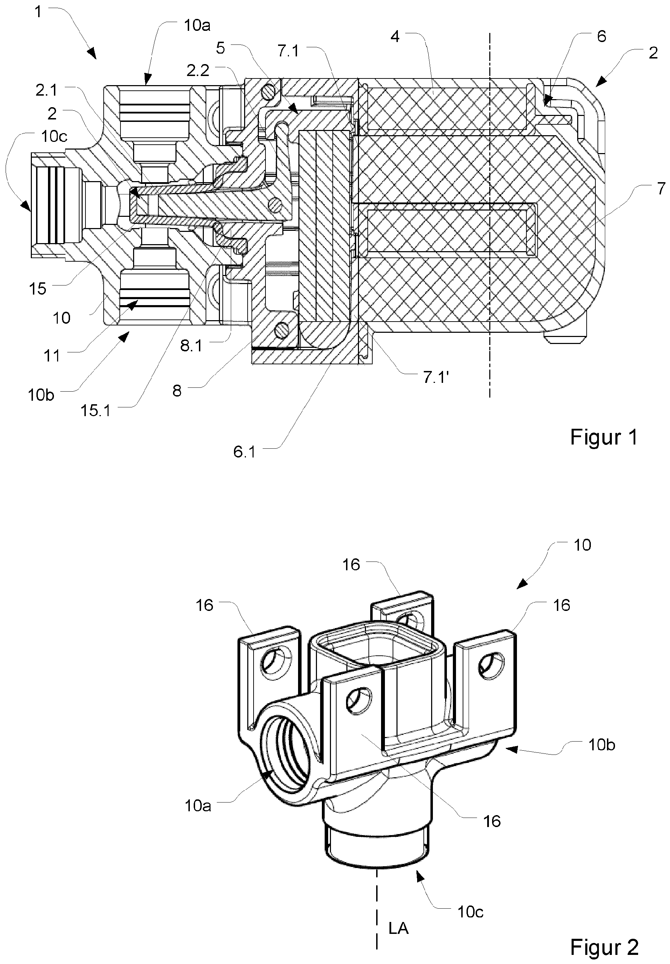

Figur 1 zeigt beispielhaft und schematisch eine Längsschnittdarstellung mittig durch ein Fluidventil 1 mit einem Ventilgehäuse 10.

Das Fluidventil 1 umfasst eine Antriebseinheit 3 für einen Ventilschließkörper 2 und ein Ventilgehäuse 10, in dem zumindest ein Fluidkanal 11 vorgesehen ist. Der Ventilschließkörper 2 reicht in das Ventilgehäuse 10 hinein und ist mit der Antriebseinheit 3 derart gekoppelt, dass der Ventilschließkörper 2 durch die Antriebseinheit 3 bewegbar, insbesondere verschwenkbar ist. Insbesondere kann der Ventilschließkörper 2 eine erste und eine zweite Schwenkstellung einnehmen, um abhängig von der Schwenkstellung eine Ventilöffnung 10.1 freizugeben bzw. zu schließen. Im gezeigten Ausführungsbeispiel weist das Ventilgehäuse 10 drei Anschlüsse 10a, 10b, 10c auf, wobei abhängig von der Schwenkstellung des Ventilschließkörpers 2 jeweils ein Paar von Anschlüssen 10a, 10b, 10c miteinander fluidisch verbunden ist. Abweichend davon kann das Fluidventil 1 aber auch lediglich zwei Anschlüsse 10a, 10b, 10c aufweisen, wobei abhängig von der Schwenkstellung des Ventilschließkörpers 2 eine fluidische Verbindung zwischen den beiden Anschlüssen freigegeben wird oder nicht. Das Ventilgehäuse 10 kann an den Anschlüssen 10a, 10b, 10c jeweils eine Aufnahme 17 für eine Schlauchschnellkupplung aufweisen. Die Schlauchschnellkupplung kann dabei derart ausgebildet sein, dass ein freies Ende eines Schlauchs in die Schlauchschnellkupplung eingeführt werden und dadurch eine fluiddichte Verbindung zwischen dem Schlauchinnenraum und dem im Ventilgehäuse 10 ausgebildeten Fluidkanal 11 gebildet wird. Die Schlauchschnellkupplung kann zudem Sicherungsmittel gegen ein unerwünschtes Herauslösen des Schlauchs aus der Schlauchschnellkupplung aufweisen.

Das Fluidventil 1 weist die folgende Funktionalität auf: die Antriebseinheit 3 ist dazu ausgebildet, die Schwenkstellung eines Ankers 5 zu beeinflussen. Die Antriebseinheit 3 ist beispielsweise eine elektromagnetische Antriebseinheit, d.h. bei Bestromung einer Spule 4 der Antriebseinheit 3 wird eine Magnetkraft erzeugt, mittels der der Anker 5 aus einer zweiten Schwenkstellung in eine erste Schwenkstellung bewegt wird. Diese erste Schwenkstellung ist in Fig. 1 gezeigt. Diese erste Schwenkstellung wird solange gehalten, solange die Spule 4 bestromt ist. Der Anker 5 ist vorzugsweise mittels einer Feder derart federbelastet, dass dieser nach dem Beenden des Stromflusses durch die Spule 4 in die zweite Schwenkstellung zurückbewegt wird.

Wie in Fig. 1 gezeigt, ist der Ventilschließkörper 2 mit dem Anker 5 derart gekoppelt, dass der Ventilschließkörper 2 durch den Anker 5 bewegt, insbesondere verschwenkt wird. Insbesondere nimmt der Ventilschließkörper 2 im Ventilgehäuse 10 abhängig von der Schwenkstellung des Ankers 5 eine erste oder zweite Stellung ein und definiert damit die Ventilstellung bzw. das Freigeben bzw. Verschließen zumindest eines Fluidkanals 11.

Die Antriebseinheit 2 umfasst beispielsweise einen Grundkörper 6. Der Grundkörper 6 bildet die tragende Grundstruktur der Antriebseinheit 3. Er ist vorzugsweise als Spitzgussteil, insbesondere als Kunststoffspritzgussteil, ausgebildet. Der Grundkörper 6 weist eine rohrförmig oder im Wesentlichen rohrförmig ausgebildete Aufnahme für die Spule 4 auf. Innerhalb der Aufnahme ist eine erste Einschuböffnung ausgebildet, in die ein Schenkel eines U-förmig ausgebildeten Kerns 7 einschiebbar ist.

Der Grundkörper 6 umfasst des Weiteren eine Ankeraufnahme 6.1. Diese Ankeraufnahme 6.1 schließt an die Aufnahme der Spule 4 unmittelbar an und ist dazu ausgebildet, den Anker 5 verschwenkbar zu lagern. Die Ankeraufnahme 6.1 ist schalenartig, insbesondere rechteckschalenartig ausgebildet und weist einen Bodenbereich und mehrere Wandungsbereiche auf. Die Wandungsbereiche sind mit dem Bodenbereich verbunden, umgeben den Bodenbereich umfangsseitig und stehen von dem Bodenbereich ab, und zwar zu einer Seite, die der Spule 4 abgewandt ist.

In dem Bodenbereich ist eine zweite Einschuböffnung vorgesehen, in die ein zweiter Schenkel eines U-förmig ausgebildeten Kerns 7 einschiebbar ist. Der U-förmige Kern 7 ist damit jochartig ausgebildet, wobei ein Schenkel des Kerns 7 durch die Spule 4 umgeben ist, so dass bei Bestromung der Spule 4 ein geschlossener magnetischer Kreis durch den Kern 7 und den die Polflächen 7.1, 7.1' des Kerns 7 überspannenden Anker 5 gebildet wird.

An der Ankeraufnahme 6.1 ist an der dem Kern 7 bzw. der Spule 4 abgewandten Seite ein Ventilgehäuseträger 8 vorgesehen. Der Ventilgehäuseträger 8 ist dazu ausgebildet, die Verbindung zwischen der Antriebseinheit 2 und dem Ventilgehäuse 10 herzustellen. Der Ventilgehäuseträger 8 ist beispielsweise mit der Wandung der Ankeraufnahme 6.1 verbunden und verschließt insbesondere die schalenartig ausgebildete Ankeraufnahme 6.1, abgesehen von einer Durchführöffnung für den Ventilschließkörper 2.

Der Ventilgehäuseträger 8 weist Befestigungsmittel auf, mittels denen sich das Ventilgehäuse 10 zur lösbar an der Antriebseinheit 2 befestigen lässt. Wie insbesondere in Fig. 2 zu erkennen, weist das Ventilgehäuse 10 beispielsweise mehrere laschenartig ausgebildete Kopplungsabschnitte 16 auf, die mit Rastnasen am Ventilgehäuseträger 8 zusammenwirken und zur Herstellung einer Rastverbindung mit dem Ventilgehäuseträger 8 dienen. Auch eine invers ausgebildete Fixierung ist grundsätzlich denkbar, d.h. dass die Kopplungsabschnitte 16 an dem Ventilgehäuseträger 8 vorgesehen sind, die mit Rastnasen des Ventilgehäuses 10 zusammenwirken.

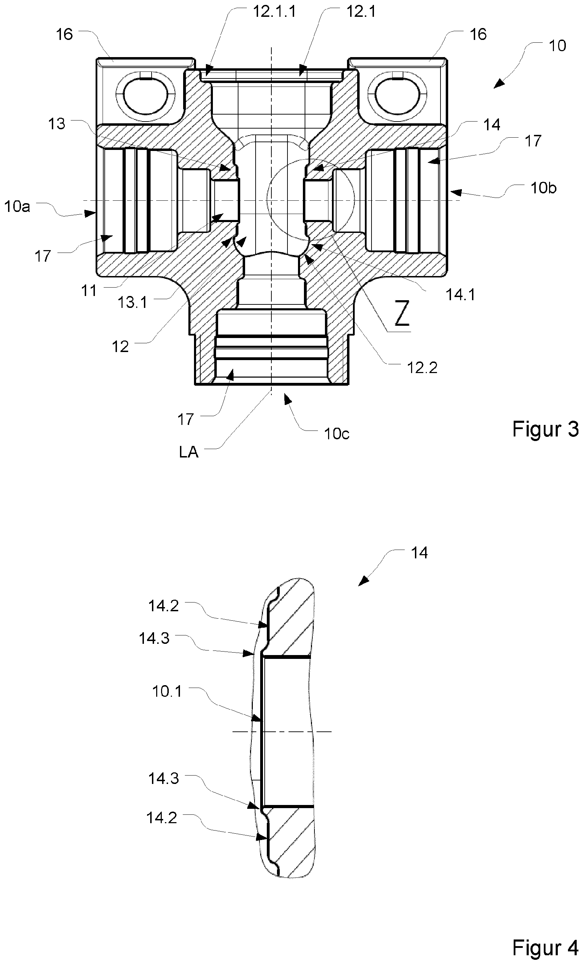

Fig. 3 zeigt eine Schnittdarstellung mittig durch das in Fig. 2 gezeigte Ventilgehäuse 10, und zwar derart, dass ein Längsschnitt durch die im Ventilgehäuse 10 ausgebildeten Fluidkanäle 11 entsteht.

In dem Ventilgehäuse 10 ist ein Paar von Anschlüssen 10a, 10b diametral gegenüberliegend und ein weiterer Anschluss 10c unterhalb und der Öffnung 12.1 des Aufnahmeraums 12 gegenüberliegend vorgesehen. In diesem Ausführungsbeispiel kann je nach Stellung des Ventilschließkörpers entweder eine Fluidverbindung zwischen den Anschlüssen 10a und 10c oder zwischen den Anschlüssen 10b und 10c hergestellt werden. Das Fluidventil 1 bildet dabei eine Fluidweiche, bei der der als Einlass fungierende Anschluss 10c entweder mit dem Anschluss 10a oder dem Anschluss 10b als Auslass gekoppelt wird, oder bei der der als Auslass fungierende Anschluss 10c entweder mit dem Anschluss 10a oder dem Anschluss 10b als Einlass gekoppelt wird.

In einem alternativen Ausführungsbeispiel kann der Anschluss 10b entfallen, so dass durch das Fluidventil 1 - je nach Schaltzustand - entweder der Fluidkanal zwischen den Anschlüssen 10a und 10c geöffnet oder geschlossen ist.

Der Ventilschließkörper 2 weist im gezeigten Ausführungsbeispiel zwei Schenkel 2.1, 2.2 auf. Der erste Schenkel 2.1 ragt in den Aufnahmeraum 12 hinein. Ein zweiter Schenkel 2.2 ist vorzugsweise schräg, insbesondere rechtwinklig oder im Wesentlichen rechtwinklig zum ersten Schenkel ausgerichtet und verbindet den Ventilschließkörper 2 mit dem Anker 5.

Der erste Schenkel 2.1 ist abschnittsweise und insbesondere im Bereich dessen freien Endes von einer Dichtmembran 15 umgeben. Die Dichtmembran 15 dient zum einen als Dichtelement zur Abdichtung der Ventilöffnung 10.1, zum anderen zur Abrichtung der Öffnung 12.1 des Aufnahmeraums 12 in Richtung der Antriebseinheit 3. Die Dichtmembran 15 ist, wie in Fig. 1 gezeigt, hutartig ausgebildet. Sie kann insbesondere in dem in den Aufnahmeraum 12 hineinreichenden, unteren Bereich umfangsseitig geschlossen ausgebildet und an das freie Ende des ersten Schenkels 2.1 des Ventilschließkörpers 2 formangepasst sein, so dass das freie Ende des ersten Schenkels 2.1 passgenau in der Dichtmembran 15 aufgenommen wird.

In dem Aufnahmeraum 12 ist zumindest ein Ventilsitz 13, 14 vorgesehen. Der Ventilsitz 13, 14 ist vorzugsweise an der Seitenwand des Aufnahmeraums 12 vorgesehen, die parallel oder im Wesentlichen parallel zur Längsachse LA des Aufnahmeraums 12 verläuft. Im gezeigten Ausführungsbeispiel ist an einander gegenüberliegenden Seitenwänden des Aufnahmeraums 12 ein Paar von Ventilsitzen 13, 14 vorgesehen, so dass ein erster Ventilsitz 13 einem zweiten Ventilsitz 14 diametral und in gleicher Höhenposition gegenüberliegt.

Das Ventilgehäuse 10 ist einstückig als Spitzgussteil, insbesondere als Kunststoffspritzgussteil, ausgebildet. Der zumindest eine Ventilsitz 13, 14 ragt derart in den Aufnahmeraum 12 hinein, dass sich durch den Ventilsitz 13, 14 eine Hinterschneidung 13.1, 14.1 bildet. Die Hinterschneidung 13.1, 14.1 ist dabei im unteren Bereich 12.2 des Aufnahmeraums 12 und unterhalb der Ventilsitze 13, 14 der Öffnung 12.1 gegenüberliegend vorgesehen.

Fig. 4 zeigt die Ausgestaltung des zweiten Ventilsitzes 14 mehr im Detail. Es sei darauf verwiesen, dass der erste Ventilsitz 13 vorzugsweise identisch zum zweiten Ventilsitz 14 ausgebildet ist. Der Ventilsitz 14 weist eine ringförmige, insbesondere kreisringförmige Erhebung 14.2 auf, die von der Seitenwand in den Aufnahmeraum 12 vorsteht. Im Inneren der kreisringförmigen Erhebung 14.2 ist die Ventilöffnung 10.1 vorgesehen, die bei Anlage des mit der Dichtmembran 15 versehenen Ventilschließkörpers 2 durch diesen fluiddicht verschlossen wird.

Die Erhebung 14.2 bildet eine flächige Anlage für die Dichtmembran 15 bzw. den Ventilschließkörper 2, so dass der Ventilschließkörper 2 durch die Erhebung 14.2 in seinem Verschwenkweg begrenzt wird.

Vorzugsweise ist der Anker 5 anschlagsfrei in der Ankeraufnahme 6.1 gehalten, d.h. die Schwenkbewegung des Ankers 5 wird weder in der ersten noch in der zweiten Schwenkstellung durch ein Anliegen eines Ankerabschnitts an Komponenten, die den Anker 5 umgeben, begrenzt. Vielmehr erfolgt die Begrenzung der Schwenkbewegung des Ankers 5 durch den Ventilschließkörper 2, der abhängig von der Schwenkstellung des Ankers 5 an den Ventilsitzen 13, 14 bzw. in dem Fall, dass lediglich ein Ventilsitz vorgesehen ist, an einem diesem Ventilsitz gegenüberliegenden Anschlag im Ventilgehäuse 10 zur Anlage gelangt. Es sei angemerkt, dass auch in der zweiten Schwenkstellung des Ankers 5, die bei Stromfluss durch die Spule 4 eingenommen wird, der Anker 5 zu den Polflächen 7.1, 7.1' beabstandet ist. Der Abstand beträgt vorzugsweise weniger als 1mm, insbesondere weniger als 0,5mm, um eine möglichst hohe Krafteinleitung in den Anker 5 zu erreichen.

Auf der Erhebung 14.2 ist vorzugsweise eine Dichtkante vorgesehen, die dazu ausgebildet ist, sich bei Anlage der Dichtmembran 15 an der Erhebung 14.2 in die Dichtmembran 15 einzudrücken. Dadurch wird eine hohe Dichtigkeit der durch den Ventilschließkörper 2 verschlossenen Ventilöffnung 10.1 erreicht.

Wie insbesondere in Fig. 2 ersichtlich, weist die Öffnung 12.1, über die der Ventilschließkörper 2 in den Aufnahmeraum 12 hineinragt, innenseitig eine Anlagefläche für die Dichtmembran 15 auf. Die Dichtmembran 15 weist einen Fußbereich 15.1 auf, die außenumfangsseitig der Umfangsform der Öffnung 12.1 entspricht. Zudem weist der Ventilgehäuseträger 8 einen Fortsatz 8.1 auf, der mit seiner Außenseite gegen die Innenwand des Fußbereichs 15.1 der Dichtmembran 15 anliegt. Der Fortsatz 8.1 ist derart an den Fußbereich 15.1 und die Öffnung 12.1 formangepasst, dass die Dichtmembran 15 im Fußbereich 15.1 radial gegen den Rand 12.1.1 der Öffnung angepresst und damit der Aufnahmeraum 12 am Übergang zwischen dem Ventilgehäuse 10 und dem Ventilgehäuseträger 8 abgedichtet ist.

Die Öffnung 12.1 weist innenseitig vorzugsweise eine rotationsunsymmetrische Umfangsform auf. Dadurch wird sichergestellt, dass die Dichtmembran 15 lediglich in einer definierten Einbaulage bzw. rotativen Ausrichtung in den Aufnahmeraum 12 einsetzbar ist, so dass die flächige Anpressung der Dichtmembran 15 an den zumindest einen Ventilsitz 13, 14 mittels des Ventilschließkörpers 2 sichergestellt wird.

Nachfolgend wird die Herstellung des Ventilgehäuses 10 mittels eines Spritzgießverfahrens näher erläutert.

Wie zuvor erläutert, ragt der zumindest eine Ventilsitz 13, 14 bzw. der Anschlag (für den Fall, dass lediglich ein Ventilsitz vorgesehen ist und die Schwenkbewegung des Ventilschließkörpers 2 auf der dem Ventilsitz gegenüberliegenden Seite durch einen Anschlag begrenzt ist) in den Aufnahmeraum 12 hinein, so dass Hinterschneidungen 13.1, 14.1 entstehen. Der zumindest eine Ventilsitz 13, 14 bzw. der Anschlag sind einstückig am Spritzgussteil vorgesehen, d.h. werden zeitgleich mit den übrigen Abschnitten des Ventilgehäuses 10 hergestellt. Damit bilden sich auch die Hinterschneidungen 13.1, 14.1 durch den Spritzgießvorgang.

Zur Herstellung der Anschlüsse 10a, 10b, 10c und des Aufnahmeraums 12 werden Kerne verwendet, die in die Spritzgussform eingebracht sind, um die jeweiligen Abschnitte des zumindest einen Fluidkanals 11 bzw. den Aufnahmeraum 12 auszuformen. Der Kern, der zur Bildung des Aufnahmeraums 12 verwendet wird, ist als zusammenfallender Kern ausgebildet. Dabei bedeutet "zusammenfallend", dass der Kern nach der Durchführung des Spritzgussvorgangs und der Aushärtung des Gussmaterials zunächst in seiner Form verändert und damit außenumfangsseitig derart verkleinert wird, dass dieser trotz der Hinterschneidungen 13.1, 14.1 aus dem Aufnahmeraum 12 herausgezogen werden kann.

Der zusammenfallende Kern weist an diametral gegenüberliegenden Seiten jeweils eine Ausnehmung auf, die zur Herstellung des zumindest einen Ventilsitzes 13, 14 bzw. des Anschlags dient. Die Ausnehmung zur Herstellung des zumindest einen Ventilsitzes 13, 14 weist beispielsweise eine Form auf, die invers zu der vorbeschriebenen Form des Ventilsitzes 13, 14 ausgebildet ist. Insbesondere ist die Ausnehmung dazu ausgebildet die ringförmige Erhebung 14.2 und die davon abstehende Dichtkante 14.3 zu formen.

Zudem ist der zusammenfallende Kern auch dazu ausgebildet, die rotationsunsymmetrische Umfangsform der Öffnung 12.1 des Aufnahmeraums 12 zu bilden.

Nachfolgend werden die Schritte des Verfahrens zur Herstellung des Ventilgehäuses 10 näher beschrieben:
Zunächst werden eine Spritzgussform (S10) und ein erster und zweiter Kern (S11), die zur Ausbildung von Abschnitten zumindest eines Fluidkanals in dem Ventilgehäuse vorgesehen sind, bereitgestellt.

Des Weiteren wird ein zusammenfallender Kern zur Ausbildung des Aufnahmeraums bereitgestellt (S12). Der zusammenfallende Kern weist zumindest eine Ausnehmung zur Herstellung zumindest eines Ventilsitzes in dem Aufnahmeraum auf.

Anschließend erfolgt das Einbringen des ersten und zweiten Kerns und des zusammenfallenden Kerns in die Spritzgießform. Der erste und/oder zweite Kern wirkt dabei derart mit dem zusammenfallenden Kern zusammen, dass das freie Ende des ersten Kerns auf die Ausnehmung des zusammenfallenden Kerns hin ausgerichtet ist (S13).

Anschließend wird ein fließfähiges Gussmaterial in die Spritzgussform eingebracht (S14).

Nach dem Aushärten des Gussmaterials wird der erste und zweite Kern sowie der zusammenfallende Kerns nach dessen Größenreduzierung aus der Spritzgussform entfernt (S15).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fluidventil
- 2: Ventilschließkörper
- 2.1: erster Schenkel
- 2.2: zweiter Schenkel
- 3: Antriebseinheit
- 4: Spule
- 5: Anker
- 6: Grundkörper
- 6.1: Ankeraufnahme
- 7: Kern
- 7.1, 7.1': Polfläche
- 8: Ventilgehäuseträger
- 8.1: Fortsatz

- 10: Ventilgehäuse
- 10a, b, c: Anschluss
- 10.1: Ventilöffnung
- 11: Fluidkanal
- 12: Aufnahmeraum
- 12.1: Öffnung
- 12.1.1: Rand
- 12.2: unterer Bereich
- 13: erster Ventilsitz
- 13.1: Hinterschneidung
- 14: zweiter Ventilsitz
- 14.1: Hinterschneidung
- 14.2: ringförmige Erhebung
- 14.3: Dichtkante

- 15: Dichtmembran
- 15.1: Fußbereich
- 16: Kopplungsabschnitt
- 17: Aufnahme

- LA: Längsachse des Aufnahmeraums

## Patentansprüche

1. Ventilgehäuse für ein Fluidventil (1) umfassend zumindest einen von einem Fluid durchfließbaren Fluidkanal (11), wobei das Ventilgehäuse (10) einen Aufnahmeraum (12) für einen im Ventilgehäuse (10) bewegbaren Ventilschließkörper (2) aufweist, wobei der Aufnahmeraum (12) eine Öffnung (12.1) aufweist, über die der Ventilschließkörper (2) in den Aufnahmeraum (12) des Ventilgehäuses (10) eingebracht ist und wobei in dem Aufnahmeraum (12) zumindest ein erster Ventilsitz (13) ausgebildet ist und in den Aufnahmeraum (12) hineinragt, und zwar derart, dass sich durch den ersten Ventilsitz (13) zumindest eine Hinterschneidung (13.1) in dem Aufnahmeraum (12) ausbildet und wobei das Ventilgehäuse (10) ein einstückig ausgebildetes Spritzgussteil ist, wobei der zumindest eine Ventilsitz (13) einstückig mit dem Ventilgehäuse (10) durch einen Spritzgießprozess hergestellt ist.

2. Ventilgehäuse nach Anspruch 1, **dadurch gekennzeichnet, dass** dem ersten Ventilsitz (13) entweder ein zweiter Ventilsitz (14) oder ein Anschlag für den Ventilschließkörper (2) im Aufnahmeraum (12) diametral gegenüberliegt.

3. Ventilgehäuse nach Anspruch 2, **dadurch gekennzeichnet, dass** der zweite Ventilsitz (14) oder der Anschlag für den Ventilschließkörper in den Aufnahmeraum (12) hineinragt, und zwar derart, dass sich durch den zweiten Ventilsitz (14) oder den Anschlag zumindest eine Hinterschneidung (14.1) in dem Aufnahmeraum (12) ausbildet.

4. Ventilgehäuse nach einem der vorhergehenden Ansprüche, **dadurch gekennzeichnet, dass** die Hinterschneidung (14.1) an einem der Öffnung (12.1) abgewandten unteren Bereich (12.2) des Aufnahmeraums (12) vorgesehen ist.

5. Ventilgehäuse nach einem der vorhergehenden Ansprüche, **dadurch gekennzeichnet, dass** der erste und/oder zweite Ventilsitz (13, 14) eine ringförmige Erhebung (13.2) aufweist, die eine planare Anlagefläche für eine den Ventilschließkörper (2) abschnittsweise umgebende Dichtmembran (15) ausbildet und dass an der Erhebung eine ringförmige Dichtkante (13.3) vorgesehen ist, die axial in den Aufnahmeraum (12) vorsteht.

6. Ventilgehäuse nach einem der vorhergehenden Ansprüche, **dadurch gekennzeichnet, dass** die Dichtkante (13.3) am radial inneren Rand der ringförmigen Erhebung (13.2) vorgesehen ist.

7. Ventilgehäuse nach einem der vorhergehenden Ansprüche, **dadurch gekennzeichnet, dass** der Rand (12.1.1) der Öffnung (12.1) des Aufnahmeraums (12) eine Radialdichtfläche ausbildet, die zur Anlage eines Fußbereichs (15.1) einer Dichtmembran (15) vorgesehen ist, die zur Abdichtung der Öffnung (12.1) nach außen hin dient.

8. Ventilgehäuse nach einem der vorhergehenden Ansprüche, **dadurch gekennzeichnet, dass** die Öffnung (12.1) eine rotationsunsymmetrische Umfangsform aufweist.

9. Ventilgehäuse nach einem der vorhergehenden Ansprüche, **dadurch gekennzeichnet, dass** das Ventilgehäuse (10) Kopplungsabschnitte (16) aufweist, mittels denen das Ventilgehäuse (10) lösbar an einer Antriebseinheit (3) befestigbar ist, mittels der der Ventilschließkörper (2) bewegbar ist.

10. Ventilgehäuse nach Anspruch 9, **dadurch gekennzeichnet, dass** die Kopplungsabschnitte (16) zur rastenden Befestigung an der Antriebseinheit (3) ausgebildet sind.

11. Ventilgehäuse nach einem der vorhergehenden Ansprüche, **dadurch gekennzeichnet, dass** das Ventilgehäuse (10) zumindest eine Aufnahme (17) für eine Schlauchschnellkupplung aufweist.

12. Fluidventil umfassend ein Ventilgehäuse (10) und eine magnetische Antriebseinheit (3) für einen im Ventilgehäuse (10) bewegbaren Ventilschließkörper (2), **dadurch gekennzeichnet, dass** das Ventilgehäuse (10) gemäß einem der vorhergehenden Patentansprüche ausgebildet ist.

13. Verfahren zur Herstellung eines Ventilgehäuses (10) für ein Fluidventil (1), das zumindest einen von einem Fluid durchfließbaren Fluidkanal (11), einen Aufnahmeraum (12) für einen im Ventilgehäuse (10) bewegbaren Ventilschließkörper (2) aufweist, wobei das Verfahren die folgenden Schritte umfasst:
- Bereitstellen einer Spritzgussform (S10);
- Bereitstellen zumindest eines ersten und zweiten Kerns, die zur Ausbildung von Abschnitten zumindest eines Fluidkanals (11) in dem Ventilgehäuse (10) vorgesehen sind (S11);
- Bereitstellen eines zusammenfallenden Kerns zur Ausbildung des Aufnahmeraums (12), wobei der zusammenfallende Kern zumindest eine Ausnehmung zur Herstellung zumindest eines Ventilsitzes (13, 14) in dem Aufnahmeraum (12) aufweist (S12);
- Einbringen des ersten und zweiten Kerns und des zusammenfallenden Kerns in die Spritzgussform, wobei zumindest der erste Kern derart mit dem zusammenfallenden Kern zusammenwirkt, dass das freie Ende des ersten Kerns auf die Ausnehmung des zusammenfallenden Kerns hin ausgerichtet ist (S13);
- Einbringen eines fließfähigen Gussmaterials in die Spritzgussform (S14); und
- Herauslösen des ersten und zweiten Kerns sowie des zusammenfallenden Kerns aus der Spritzgussform (S15);
wobei das durch den Spritzgießvorgang erzeugte Ventilgehäuse (10) zumindest einen Ventilsitz (13, 14) aufweist, der in den Aufnahmeraum (12) hineinragt, und zwar derart, dass sich durch den Ventilsitz (13, 14) zumindest eine Hinterschneidung (13.1, 14.1) in dem Aufnahmeraum (12) ausbildet.

14. Verfahren nach Anspruch 13, **dadurch gekennzeichnet, dass** durch den zusammenfallenden Kern zumindest ein Ventilsitz (13, 14) mit einer ringförmigen Erhebung (13.2) gebildet wird, die eine planare Anlagefläche für eine den Ventilschließkörper (2) abschnittsweise umgebende Dichtmembran (15) ausbildet und dass durch den zusammenfallenden Kern an der Erhebung eine ringförmige Dichtkante (13.3) gebildet wird, die axial in den Aufnahmeraum (12) vorsteht.

15. Verfahren nach Anspruch 13 oder 14, dass durch den zusammenfallenden Kern eine außenseitig am Ventilgehäuse (10) vorgesehene Öffnung (12.1) des Aufnahmeraums (12) gebildet wird, die eine rotationsunsymmetrische Umfangsform aufweist.

## Geänderte Patentansprüche

### Geänderte Patentansprüche gemäss Regel 137(2) EPÜ.

1. Ventilgehäuse für ein Fluidventil (1) umfassend zumindest einen von einem Fluid durchfließbaren Fluidkanal (11), wobei das Ventilgehäuse (10) einen Aufnahmeraum (12) für einen im Ventilgehäuse (10) verschwenkbaren Ventilschließkörper (2) aufweist, wobei der Aufnahmeraum (12) eine Öffnung (12.1) aufweist, über die der Ventilschließkörper (2) in den Aufnahmeraum (12) des Ventilgehäuses (10) eingebracht ist und wobei in dem Aufnahmeraum (12) zumindest ein erster Ventilsitz (13) ausgebildet ist und in den Aufnahmeraum (12) hineinragt, und zwar derart, dass sich durch den ersten Ventilsitz (13) zumindest eine Hinterschneidung (13.1) in dem Aufnahmeraum (12) ausbildet und wobei das Ventilgehäuse (10) ein einstückig ausgebildetes Spritzgussteil ist, wobei der zumindest eine Ventilsitz (13) einstückig mit dem Ventilgehäuse (10) durch einen Spritzgießprozess hergestellt ist, **dadurch gekennzeichnet, dass** dem ersten Ventilsitz (13) entweder ein zweiter Ventilsitz (14) oder ein Anschlag für den Ventilschließkörper (2) im Aufnahmeraum (12) diametral gegenüberliegt, dass der zweite Ventilsitz (14) oder der Anschlag für den Ventilschließkörper in den Aufnahmeraum (12) hineinragt, und zwar derart, dass sich durch den zweiten Ventilsitz (14) oder den Anschlag zumindest eine Hinterschneidung (14.1) in dem Aufnahmeraum (12) ausbildet und dass die Hinterschneidungen (13.1, 14.1) im unteren Bereich (12.2) des Aufnahmeraums (12) und unterhalb des ersten Ventilsitzes (13) und des zweiten Ventilsitzes (14) oder des Anschlags der Öffnung (12.1) gegenüberliegend vorgesehen sind.

2. Ventilgehäuse nach Anspruch 1, **dadurch gekennzeichnet, dass** die Hinterschneidung (14.1) an einem der Öffnung (12.1) abgewandten unteren Bereich (12.2) des Aufnahmeraums (12) vorgesehen ist.

3. Ventilgehäuse nach einem der vorhergehenden Ansprüche, **dadurch gekennzeichnet, dass** der erste und/oder zweite Ventilsitz (13, 14) eine ringförmige Erhebung (13.2) aufweist, die eine planare Anlagefläche für eine den Ventilschließkörper (2) abschnittsweise umgebende Dichtmembran (15) ausbildet und dass an der Erhebung eine ringförmige Dichtkante (13.3) vorgesehen ist, die axial in den Aufnahmeraum (12) vorsteht.

4. Ventilgehäuse nach einem der vorhergehenden Ansprüche, **dadurch gekennzeichnet, dass** die Dichtkante (13.3) am radial inneren Rand der ringförmigen Erhebung (13.2) vorgesehen ist.

5. Ventilgehäuse nach einem der vorhergehenden Ansprüche, **dadurch gekennzeichnet, dass** der Rand (12.1.1) der Öffnung (12.1) des Aufnahmeraums (12) eine Radialdichtfläche ausbildet, die zur Anlage eines Fußbereichs (15.1) einer Dichtmembran (15) vorgesehen ist, die zur Abdichtung der Öffnung (12.1) nach außen hin dient.

6. Ventilgehäuse nach einem der vorhergehenden Ansprüche, **dadurch gekennzeichnet, dass** die Öffnung (12.1) eine rotationsunsymmetrische Umfangsform aufweist.

7. Ventilgehäuse nach einem der vorhergehenden Ansprüche, **dadurch gekennzeichnet, dass** das Ventilgehäuse (10) Kopplungsabschnitte (16) aufweist, mittels denen das Ventilgehäuse (10) lösbar an einer Antriebseinheit (3) befestigbar ist, mittels der der Ventilschließkörper (2) bewegbar ist.

8. Ventilgehäuse nach Anspruch 7, **dadurch gekennzeichnet, dass** die Kopplungsabschnitte (16) zur rastenden Befestigung an der Antriebseinheit (3) ausgebildet sind.

9. Ventilgehäuse nach einem der vorhergehenden Ansprüche, **dadurch gekennzeichnet, dass** das Ventilgehäuse (10) zumindest eine Aufnahme (17) für eine Schlauchschnellkupplung aufweist.

10. Fluidventil umfassend ein Ventilgehäuse (10) und eine magnetische Antriebseinheit (3) für einen im Ventilgehäuse (10) bewegbaren Ventilschließkörper (2), **dadurch gekennzeichnet, dass** das Ventilgehäuse (10) gemäß einem der vorhergehenden Patentansprüche ausgebildet ist.

11. Verfahren zur Herstellung eines Ventilgehäuses (10) für ein Fluidventil (1), das zumindest einen von einem Fluid durchfließbaren Fluidkanal (11), einen Aufnahmeraum (12) für einen im Ventilgehäuse (10) bewegbaren Ventilschließkörper (2) aufweist, wobei das Verfahren die folgenden Schritte umfasst:
- Bereitstellen einer Spritzgussform (S10);
- Bereitstellen zumindest eines ersten und zweiten Kerns, die zur Ausbildung von Abschnitten zumindest eines Fluidkanals (11) in dem Ventilgehäuse (10) vorgesehen sind (S11);
- Bereitstellen eines zusammenfallenden Kerns zur Ausbildung des Aufnahmeraums (12), wobei der zusammenfallende Kern zumindest eine Ausnehmung zur Herstellung zumindest eines Ventilsitzes (13, 14) in dem Aufnahmeraum (12) aufweist (S12);
- Einbringen des ersten und zweiten Kerns und des zusammenfallenden Kerns in die Spritzgussform, wobei zumindest der erste Kern derart mit dem zusammenfallenden Kern zusammenwirkt, dass das freie Ende des ersten Kerns auf die Ausnehmung des zusammenfallenden Kerns hin ausgerichtet ist (S13);
- Einbringen eines fließfähigen Gussmaterials in die Spritzgussform (S14); und
- Herauslösen des ersten und zweiten Kerns sowie des zusammenfallenden Kerns aus der Spritzgussform (S15);
wobei das durch den Spritzgießvorgang erzeugte Ventilgehäuse (10) zumindest einen Ventilsitz (13, 14) aufweist, der in den Aufnahmeraum (12) hineinragt, und zwar derart, dass sich durch den Ventilsitz (13, 14) zumindest eine Hinterschneidung (13.1, 14.1) in dem Aufnahmeraum (12) ausbildet.

12. Verfahren nach Anspruch 11, **dadurch gekennzeichnet, dass** durch den zusammenfallenden Kern zumindest ein Ventilsitz (13, 14) mit einer ringförmigen Erhebung (13.2) gebildet wird, die eine planare Anlagefläche für eine den Ventilschließkörper (2) abschnittsweise umgebende Dichtmembran (15) ausbildet und dass durch den zusammenfallenden Kern an der Erhebung eine ringförmige Dichtkante (13.3) gebildet wird, die axial in den Aufnahmeraum (12) vorsteht.

13. Verfahren nach Anspruch 11 oder 12, dass durch den zusammenfallenden Kern eine außenseitig am Ventilgehäuse (10) vorgesehene Öffnung (12.1) des Aufnahmeraums (12) gebildet wird, die eine rotationsunsymmetrische Umfangsform aufweist.
